# EUROPEAN PATENT SPECIFICATION

(11) **EP 1 102 157 B1**
(45) Date of publication and mention of the grant of the patent: **09.01.2008**
(21) Application number: 99850176.1
(22) Date of filing: 22.11.1999
(51) Int. Cl.: G06F 1/00

(54) **Method and arrangement for secure login in a telecommunications system**
Methode und Verfahren zum sicheren Anmelden in einem Telekommunikationssystem
Méthode et procédé pour un enregistrement protégé dans un système de télécommunications

(43) Date of publication of application: 23.05.2001
(73) Proprietor: TELEFONAKTIEBOLAGET LM ERICSSON (publ), 164 83 Stockholm (SE)
(72) Inventor: Kriens, Peter, 439 33 Onsala (SE); Danne, Anders, 164 41 Kista (SE)
(74) Representative: Norin, Klas

(56) References cited:
- WO-A-00/03316
- WO-A-97/31306
- WO-A-99/44114

## Description

### FIELD OF INVENTION

The present invention relates to a method and arrangement for secure login over a public network.

### DESCRIPTION OF RELATED ART

In the field of data- and telecommunication, security and particularly methods and arrangements for secure login are demanded. The requirements on security products are increasing.

In the past, before remote access, organizations had closed, hard-wired networks, which provided physical security. Network access was limited to users physically located in the building. Requiring users to type in a name and password added another layer of security to the network.

Providing remote network access over telephone lines has added an entirely new dimension to the task of keeping business-critical information secure.

Conventional telephone systems are, by nature, public. Anyone can dial a number, and reach the "door" leading into a company's network. The primary concern of remote access security is to make sure that only known, authorized users can enter that door.

While technological advances have redefined the traditional workplace, they have also created more opportunities for security breakdowns. These developments, such as the growth of the Internet and more powerful desktop systems, are placing a greater burden on those responsible for the security of an organization's computing resources. For example, the explosion of the Internet has compounded security issues by combining public and private network access, resulting in a new category of security requirements that must be addressed.

Security considerations have been further complicated by the multiplicity of functions and applications that are now accessible at the PC. Because every application handles security in a different way, most users cannot access all of their applications through a single password. The need to remember multiple passwords can lead to a natural temptation to repeat or simplify passwords. Consequently, multiple levels of security can have the unintended effect of actually compromising security.

Larger organizations having global multi-point access requirements, and those having greater security concerns, wants to integrate their remote access capabilities with products specifically designed to enhance the security of information distributed over remote networks.

One alternative approach is "centralized" security, which involves having the terminal or communications server authenticate a dial-in user's identity through a single central database, known as the authentication server. This server stores all the necessary information about users, including their password and access privileges. The use of central location for authentication data allows a greater degree of security for sensitive information, greater ease of management and a more scalable solution as the size of the network increases. Authentication servers can be configured in a variety of ways, depending upon the organization's preferred network security scheme.

Authenticating a user includes the following steps:
- A user dials into a network through a remote access server.
- The remote access server forwards the user identification and password to the authentication server.
- The authentication server validates and provides access privileges to the user.

Many of the most popular remote access security enhancements operate on the principle of "security by secrecy", wherein users must have a specific object in their possession to access the network. The "secrecy" of that object creates a much larger hurdle for attackers. Security by secrecy refers to people using a complicated mechanism that is hard to know. E.g. an unlisted telephone line, but it is assumed that the number of said phone line is unknown to the public. A password is security by secrecy. The owner of the password must be the only one that should know this password.

One of the most popular methods for promoting security by obscurity is through a "smart card", which is simply a credit card containing a small, built-in computer. Not anyone who comes into possession of a smart card can use it, unless he has access to another piece of confidential information - the user password. Smart cards also help solve the problem of having to remember multiple passwords, as disclosed above.

The concept of a one-time password involves having the security server already know that a password is not going to be transmitted over insecure channels. When the user connects, he or she receives a challenge from the security server. The user takes the challenge information and uses it to calculate the response from the password. Thereat, the security server calculates the response, and compares its answer to that received from the user. The password is never transmitted over the network; nor is the same challenge used twice (e.g. RACOM, Remote Access COMmunication).

Some of these products, such as secureID, use a time-based temporary password system. When users dial in to the server, they are prompted to enter a personal identification number (PIN), along with the six-digit number currently showing on their hand-held card and password. This number changes every minute at the same time as a corresponding number on the server, making it virtually impossible to gain access to the network without the card.

The telecommunication operator Tele2 has recently developed a system called GiSMo for a mobile telecommunication system in order to authenticate a user, when he wants to make a purchase. The GiSMo system uses a GSM (Global System for Mobile communication) telephone and corresponding GSM number as a unique identity. The telephone is opened by means of the ordinary Pin-code of the owner of the telephone and a 070-number being a personal number of the owner. At each GiSMo transaction, the user is provided with a unique code by means of a text message, e.g. a Short Message Service (SMS), to the activated GSM telephone. Said unique code can only be used for the ongoing transaction. The code is verified when the owner input it on the PC. A disadvantage with the GiSMo system provided by telecom operator Tele2 is that the text message may be eavesdropped.

WO 97/310306 A1 discloses a system for authentication of a user by sending an authentication request from a mobile phone to a password server. In reply to the message, a password is send back to the user that can be used to access a service with a data processor.

### SUMMARY OF THE INVENTION

A problem with the above disclosed methods using a smart card, such as a SIM (Subscriber Identity Module) card, is that it may take some time before the loss of such a smart card is disclosed and the usage of said card is blocked.

A problem with the methods according to prior art is that an extra code must be provided and used.

A further problem with methods according to prior art is that an extra device is required.

The invention comprises a method and arrangement for secure login in a communication system including a mobile unit, a mobile communication network, an authorization center, an application server, a computer and an untrusted network, wherein the user sets up an application session via a data connection from a personal computer to an application server and submits an identity to the authentication center. Thereafter, the application server requests authentication of this session from an authentication center. Then, the authentication center answers with a simple token to the application server, which sends said token to the user over the data connection. Thereupon, the user reads the token on a screen of the personal computer and sends the token as a text message, e.g. a Short Message Service (SMS), from the mobile unit to the authentication center. This authentication request message is generated from an application running inside the mobile unit and contains the token as entered by the user appended with the global unique identity of the cell where the message was sent from as available inside the mobile unit. The mobile unit will then send this message though the mobile communication network. Systems inside the mobile communication network extend the message with current time and A-number of the sending mobile unit and forward this extended message to the authentication center. Finally, the message arrives within a certain time in the authentication center where the token is used to match it to the application session. There the A-number and the cell identity are verified against the given identity for that session. Both A-number and cell identity must be allowed for the given user identity. If optionally other authentication mechanisms like for example time are satisfied, the authentication center sends a message to the application server informing the application server that the user is correctly authenticated. When no message arrives within a certain time or a message with an A-number not associated with the user identity or a message with a cell identity not associated with the user identity then the Authentication Centers sends a message to the application server that the session is not authenticated. If a message arrives after a certain time, it is discarded.

The method as disclosed herein may be implemented by means of a computer program.

The main purpose of the method as disclosed herein is to provide a secure method for secure login, wherein a mobile access unit, such as a mobile telephone, is used instead of a smart card.

A purpose of the method disclosed herein is to provide a secure method and arrangement for remote login.

An advantage of the method as disclosed herein is that no extra pin-code is required.

A further advantage of the method as disclosed herein is that no extra device is required.

A yet further advantage of the method as disclosed herein is that the loss of the phone is discovered earlier than the loss of a smart card, and actions to address said loss may be taken sooner.

The term "comprises/comprising" when used in this specification is taken to specify the presence of stated features, integers, steps or components but does not preclude the presence or addition of one or more other features, integers, steps, components or groups thereof.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

- Figure 1: is a sequence diagram illustrating a method according to prior art.
- Figure 2: is a sequence diagram according to the invention
- Figure 3: is an overview of the system according to the invention.

The invention will now be described in more detail with reference to preferred exemplifying embodiments thereof and with reference to the accompanying drawings.

### DETAILED DESCRIPTION

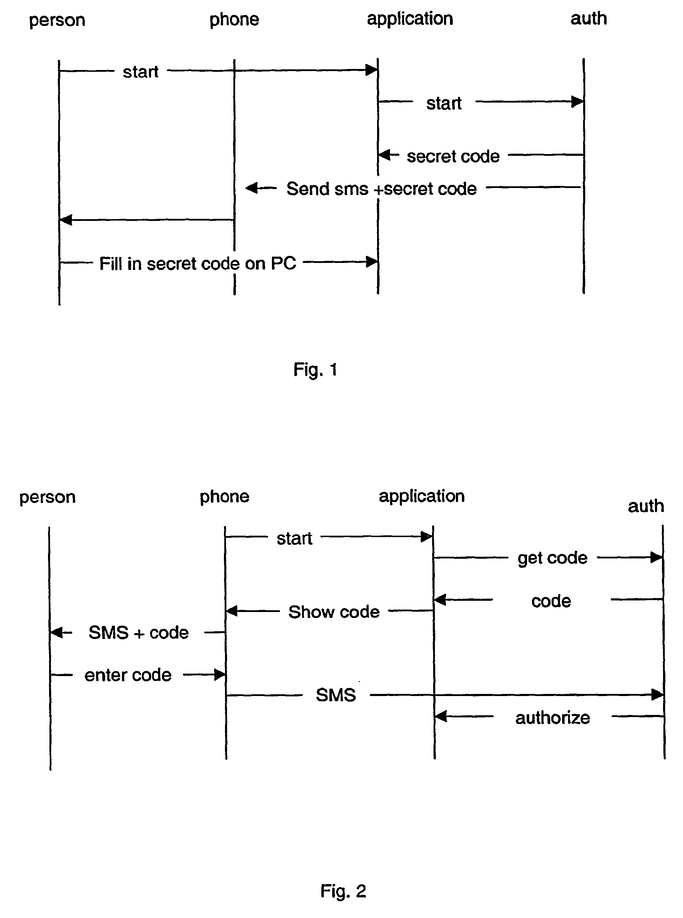

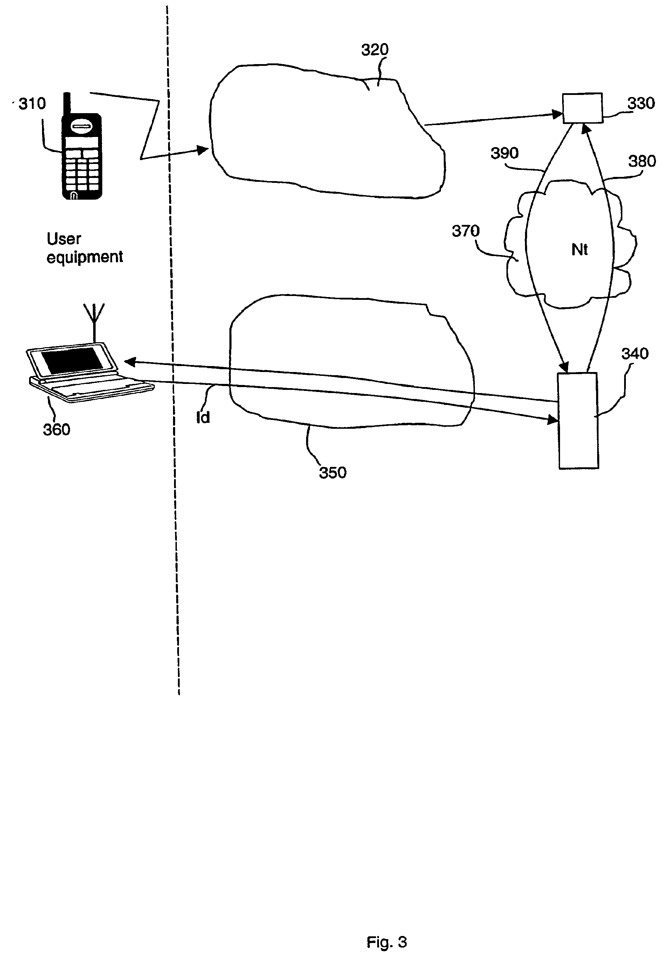

The method according to the invention will now be disclosed with reference to fig. 2 and 3. In the method disclosed herein a cellular telephone 310 provided with a PIN number is used instead of a special key card device. A text service, such as Short Message Service (SMS), is used for communication at login.

In a system implementing the method disclosed herein and illustrated in fig. 2, a personal computer (PC) 360 is connected to a application server 340 over an untrusted network such as the Internet. The personal computer 360 has only access to the application server when it is used by an authorized person (not shown in the figure).

In a first step, the user sets up a data communication from his personal computer 360 to an application server 340, via a network 350, and provides an identity Id. Thereafter, in a second step, the application server 340 contacts an authentication center 330 over a trusted network Nt 370 with a request 380 to authorize the given identity Id. In a third step, said authentication center 330 responds 390 with a unique challenge token, which is sent over the same data connection in the trusted network Nt 370. The token is not secret and may be predictable. The token is valid for a limited time. Thereat, in a fourth step, the user reads the token on the screen of his computer 360 and sends it back as a text message via the cellular telephone 310 to the authentication center 330 that also receives the phone number and the current cell identity associated with the cellular phone 310. The cell identity indicates the geographical location of the cellular phone 310. Depending on how the mobile communication system is designed, a mobile unit, such as the cellular telephone 310, may have one or more cell identities. In a fifth step, the authentication center checks that the text message arrives within a certain time provided with the correct token from one of the valid geographical positions. The authentication center 330 is provided with a table for each user, wherein each record comprises the identity, cellular telephone number, and valid cell identification of the user.

The token used in the method as disclosed must fulfill certain requirements. The token must be keyed in by the user. The token may consist of e.g. a 4-integers key. In an exemplary embodiment, a method using "voice recognition" may be used.

In order to implement the method as disclosed in this disclosure, a computer (not shown in the drawings) may be located in, or connected to, the authentication center 300. Said computer may be loaded with software portions for performing the method disclosed in this disclosure. In a further embodiment, said method may be implemented as hardware in a computer.

In a further embodiment, after that the application server has requested authentication to the authentication center, the authentication center sends a text message, e.g. a Short Message Service (SMS), to the telephone that needs to be replied to. Thereafter, the user replies with a positive confirmation, e.g. "Y". This procedure is more costly, but has the advantage that the application server does not require a special login UI (User Identity). E.g. in an exemplary application server, no UI is involved, and adding a login screen would be awkward. When a user of said application server uses a network address inside an intranet, an text message is sent. If said text message is acknowledged, access is allowed, otherwise, access is denied.

In a further embodiment of the invention a combined terminal, such as a smart telephone or a WAP (Wireless Application Protocol) telephone may be used instead of a mobile phone and a computer.

In a yet further embodiment, the phone sends automatically the token back as a text message.

A faked text message may only be sent from inside an operator, by means of spoofing an A-number. This can be prevented by putting an extra key in the telephone and signing the message by means of this signature key. However, this is only feasible when the secret key, e.g. the PIN number, is unknown to the operator. In a further embodiment, encryption may be used instead of signing

## Claims

1. Method for secure login in a communication system including a mobile unit (310), a mobile communication network (320), an authentication center (330), an application server (340), a computer (360) and an untrusted network (350), **characterized in** further comprising the steps of
• A user setting up a data connection from a personal computer to an application server and submitting an identity to said authentication center (330)
• The application server (340) requesting authentication from an authentication center (330)
• The authentication center (330) sending a simple token to the application server (340), which sends said token to the user over the data connection
• The user reading the token on a screen of the personal computer and sending the token as a text message from the mobile unit (310) to the authentication center (330), which also obtains a mobile phone number and a cell identification associated with the mobile unit (310).
• Provided that the text message arrives at the authentication center (330) within a certain time along with an acceptable token from one of the valid geographical positions as defined by the cell identification, the authentication center (330) sending an authentication to the application server (340).

2. Method according to claim 1, **characterized in that** the authentication center (330) is provided with a table having a record for each user comprising user identity, mobile phone number and valid cell identification.

3. Method according to claim 1, **characterized in that** a combined terminal is used instead of a mobile phone and a personal computer.

4. Method according to claim 3, **characterized in that** the combined terminal is a so-called smart phone.

5. Method according to claim 3 **characterized in that** the combined terminal is a Wireless Application Protocol (WAP) telephone.

6. Method according to claim 1, **characterized in that** the token is sent in a text message, from the authentication center (330).

7. Method according claim 6, **characterized in that** said message is a Short Message Service (SMS) message.

8. Method according to claim 1, **characterized in that** the token is automatically returned in a text message.

9. Method according to claim 8, **characterized in that** the text message is an SMS message.

10. A computer program product directly loadable in the internal memory of the authentication Center (330), **characterized by** comprising software portions for performing the method according to any of claims 1-9, when the authentication center is activated by a computer or a signal.

11. An arrangement for secure login in a communication system including a mobile unit (310), a mobile communication network (320), an authentication center (330), an application server (340), a computer (360) and an untrusted network (350), **characterized in that** the arrangement comprises
• Means for enabling a user to set up a data connection from a personal computer to an application server and to submit an identity to said authentication center (330)
• Means for enabling the application server (340) to request authentication from an authentication center (330)
• Means for enabling the authentication center (330) to send a simple token to the application server (340), which sends said token to the user over the data connection
• Means for enabling the user to read the token on a screen of the personal computer and to send the token as a text message from the mobile unit (310) to the authentication center (330), which also obtains a mobile phone number and a cell identification associated with the mobile unit (310),
• Provided that the text message arrives at the authentication center (330) within a certain time along with an acceptable token from one of the valid geographical positions as defined by the cell identification, means for enabling the authentication center (330) to send an authentication to the application server (340).

12. An arrangement according to claim 11, **characterized in that** the authentication center (330) is provided with a table having a record for each user comprising user identity, mobile phone number and valid cell identification.

13. An arrangement according to claim 11, **characterized in that** a combined terminal is used instead of a mobile phone and a personal computer.

14. An arrangement according to claim 13, **characterized in that** the combined terminal is a so-called smart phone.

15. An arrangement according to claim 13, **characterized in that** the combined terminal is a Wireless Application Protocol (WAP) telephone.

16. An arrangement according to claim 11, **characterized in that** the token is sent in text message, from the authentication center (330).

17. An arrangement according to claim 11, **characterized in that** the token is automatically returned in text message.

## Patentansprüche

1. Verfahren zur sicheren Anmeldung (Englisch: Login) in einem Kommunikationsnetzwerk mit einer mobilen Einheit (310), einem mobilen Kommunikationsnetzwerk (320), einem Authentifizierungszentrum (330), einem Anwendungs-server (340), einem Computer (360) und einem nicht vertrauenswürdigen Netzwerk (350), **dadurch gekennzeichnet, dass** es ferner die folgenden Schritte um-fasst:
• ein Benutzer errichtet eine Datenverbindung von einem Personalcomputer zu einem Anwendungsserver und reicht eine Identität an das Authentifizierungszentrum. (330) ein:
• der Anwendungsserver (340) fordert eine Authentifizierung von einem Authentifizierungszentrum (330);
• das Authentifizierungszentrum (330) sendet ein einfaches Zeichen (Englisch: Token) an den Anwendungsserver (340), der das Zeichen über die Datenverbindung an den Benutzer sendet;
• der Benutzer liest das Zeichen auf einem Schirm des Personalcomputers und sendet das Zeichen als eine Textnachricht von der mobilen Einheit (310) an das Authentifizierungszentrum (330), das ebenfalls eine Mobiltelefonnummer und eine der mobilen Einheit (310) zugeordnete Zellenidentifizierung einholt;
• vorausgesetzt, dass die Textnachricht bei dem identifizierungszentrum (330) zusammen mit einem akzeptierbaren Zeichen aus einer der durch die Zellenidentifizierung definierten gültigen geographischen Positionen innerhalb einer bestimmten Zeit eintrifft, sendet das Authentifizierungszentrum (330) eine Authentifizierung an den Anwendungsserver (340).

2. Verfahren nach Anspruch 1, **dadurch gekennzeichnet, dass** das Authentifizierungszentrum (330) mit einer Tabelle mit einem Datensatz für einen jeweiligen Benutzer versehen ist, wobei der Datensatz eine Benutzer-Identität., eine Mobiltelefonnummer und eine gültige Zellenidentifizierung umfasst.

3. Verfahren nach Anspruch 1, **dadurch gekennzeichnet, dass** ein kombiniertes Endgerät anstelle eines Mobiltelefons und eines Personalcomputers verwendet wird.

4. Verfahren nach Anspruch 3, **dadurch gekennzeichnet, dass** das kombinierte Endgerät ein so genanntes intelligentes Telefon (Englisch; Smart Phone) ist.

5. Verfahren nach Anspruch 3, **dadurch gekennzeichnet, dass** das kombinierte Endgerät ein draht loses Anwendungsprotokoll (Englisch; Wireless Application Protocol, WAP) Telefon ist.

6. Verfahren nach Anspruch 1, **dadurch gekennzeichnet, dass** das Zeichen von dem Authentifizierungszentrum (330) in einer Textnachricht gesendet wird.

7. Verfahren nach Anspruch 6, **dadurch gekennzeichnet, dass** die Nachricht eine Kurznachrichtendienst (Englisch : Short Message Service, SMS) Nachricht ist.

8. Verfahren nach Anspruch 1, **dadurch gekennzeichnet, dass** das Zeichen automatisch in einer Textnachricht zurück gesendet wird.

9. Verfahren gemäß Anspruch 8, **dadurch gekennzeichnet, dass** die Textnachricht eine SMS Nachricht ist.

10. Ein Computerprogrammprodukt, das direkt in den internen Speicher des Authentifizierungszentrums (330) ladbar ist, **dadurch gekennzeichnet, dass** es Softwareabschnitte umfasst zum Ausführen des Verfahrens gemäß einem der Ansprüche 1-9, wenn das Authentrfizrerungszentrum durch einen Computer oder ein Signal aktiviert wird.

11. Eine Anordnung für eine sichere Anmeldung in einem Kommunikationssystem mit einer mobilen Einheit (310), einem Mobiikommunikationsnetzwerk (320), einem Authentifizierungszentrum (330), einem Anwendungsserver (340), einem Computer (360) und einem nicht vertrauenswürdigen Netzwerk (350), **dadurch gekennzeichnet, dass** die Anordnung umfasst:
• Mittel zum Ermöglichen, dass ein Benutzer eine Datenverbindung von einem Personalcomputer zu einem Anwendungsserver errichtet und eine Identität zu dem Authentifizierungszentrum (330) einreicht;
• Mittel zum Ermöglichen, dass der Anwendungsserver (340) eine Authentifizierung von einem Authentifizierungszentrum (330) anfordert;
• Mittel zum Ermöglichen, dass das Authentifizierungszentrum (330) ein einfaches Zeichen an den Anwendungsserver (340) sendet, der wiederum das Zeichen über die Datenverbindung an den Benutzer sendet;
• Mittel zum Ermöglichen, dass der Benutzer das Zeichen auf einem Schirm des Personalcomputers liest und das Zeichen als eine Textnachricht, von der mobilen Einheit (310) an das Authentifizierungszentrum (330) sendet, welches [Authentifizierungszentrum] ebenfalls eine Mobiltelefonnummer und eine mit der mobilen Einheit (310) zugeordnete Zellenidentifizierung einholt;
• Mittel zum Ermöglichen, dass das Authentifizierungszentrum (330) eine Authentifizierung an den Anwendungsserver (340) sendet, vorausgesetzt, dass die Textnachricht bei dem Authentifizierungszentrum (330) zusammen mit einem akzeptierbaren Zeichen aus einer der durch die Zellenidentrfizrerung definierten, gültigen geographischen Positionen innerhalb einer bestimmten Zeit eintrifft.

12. Eine Anordnung gemäß Anspruch 11, **dadurch gekennzeichnet, dass** das Authentifizierungszentrum (330) mit einer Tabelle mit einem Datensatz für einen jeweiligen Benutzer versehen ist, wobei der Datensatz eine Benutzeridentität, eine Mobiltelefonnummer und eine gültige Zellenidentifizierung umfasst.

13. Eine Anordnung gemäß Anspruch 11, **dadurch gekennzeichnet, dass** ein kombiniertes Endgerät anstelle eines mobilen Telefons und eines Personalcomputers benutzt wird.

14. Eine Anordnung gemäß Anspruch 13, **dadurch gekennzeichnet, dass** das kombinierte Endgerät ein so genanntes intelligentes Telefon ist.

15. Eine Anordnung gemäß Anspruch 13, **dadurch gekennzeichnet, dass** das kombinierte Endgerät ein drahtloses Anwendungsprotokoll (WAP)-Telefon ist.

16. Eine Anordnung gemäß Anspruch 11, **dadurch gekennzeichnet, dass** das Zeichen von dem Authentrfizrerungszentrum (330) in einer Textnachricht gesendet wird,

17. Eine Anordnung gemäß Anspruch 11, **dadurch gekennzeichnet, dass** das Zeichen automatisch in einer Textnachricht zurückgesendet wird.

## Revendications

1. Procédé pour un enregistrement protégé dans un système de télécommunications comprenant une unité mobile (310), un réseau de télécommunications mobiles (320), un centre d'authentification (330), un serveur d'application (340), un ordinateur (360) et un réseau auquel on ne peut pas se fier (350), **caractérisé en ce qu'**il comprend de plus les étapes suivantes :
• un utilisateur établit une connexion de données à partir d'un ordinateur personnel avec un serveur d'application et soumet une identité audit centre d'authentification (330) ;
• le serveur d'application (340) demande l'authentification à partir d'un centre d'authentification (330) ;
• le centre d'authentification (330) envoie un jeton simple au serveur d'application (340), qui envoie ledit jeton à l'utilisateur sur la connexion de données ;
• l'utilisateur lit le jeton sur un écran de l'ordinateur personnel et envoie le jeton sous forme d'un message de texte à partir de l'unité mobile (310) au centre d'authentification (330), qui obtient également un numéro de téléphone mobile et une identification de cellule associés à l'unité mobile (310) ;
• à condition que le message de texte arrive au centre d'authentification (330) dans un certain temps avec un jeton acceptable à partir de l'une des positions géographiques valides comme défini par l'identification de cellule, le centre d'authentification (330) envoie une authentification au serveur d'application (340).

2. Procédé selon la revendication 1, **caractérisé en ce que** le centre d'authentification (330) est pourvu d'une table ayant un enregistrement pour chaque utilisateur comprenant une identité, un numéro de téléphone mobile et une identification de cellule valide.

3. Procédé selon la revendication 1, **caractérisé en ce qu'**un terminal combiné est utilisé à la place d'un téléphone mobile et d'un ordinateur personnel.

4. Procédé selon la revendication 3, **caractérisé en ce que** le terminal combiné est un téléphone intelligent.

5. Procédé selon la revendication 3, **caractérisé en ce que** le terminal combiné est un téléphone à protocole d'application sans fil (WAP pour Wireless Application Protocol).

6. Procédé selon la revendication 1, **caractérisé en ce que** le jeton est envoyé dans un message de texte, à partir du centre d'authentification (330).

7. Procédé selon la revendication 6, **caractérisé en ce que** ledit message est un message du service de message court (SMS pour Short Message Service).

8. Procédé selon la revendication 1, **caractérisé en ce que** le jeton est automatiquement retourné dans un message de texte.

9. Procédé selon la revendication 8, **caractérisé en ce que** le message de texte est un message SMS.

10. Produit de programme informatique chargeable directement dans la mémoire interne du centre d'authentification (330), **caractérisé en ce qu'**il comprend des parties de logiciel pour réaliser le procédé selon l'une quelconque des revendications 1 à 9, lorsque le centre d'authentification est activé par un ordinateur ou un signal.

11. Arrangement pour un enregistrement protégé dans un système de télécommunications comprenant une unité mobile (310), un réseau de télécommunications mobiles (320), un centre d'authentification (330), un serveur d'application (340), un ordinateur (360) et un réseau auquel on ne peut pas se fier (350), **caractérisé en ce que** l'arrangement comprend :
• un moyen pour permettre à un utilisateur d'établir une connexion de données à partir d'un ordinateur personnel avec un serveur d'application et soumettre une identité audit centre d'authentification (330) ;
• un moyen pour permettre au serveur d'application (340) de demander une authentification à partir d'un centre d'authentification (330) ;
• un moyen pour permettre au centre d'authentification (330) d'envoyer un jeton simple au serveur d'application (340), qui envoie ledit jeton à l'utilisateur sur la connexion de données ;
• un moyen pour permettre à l'utilisateur de lire le jeton sur un écran de l'ordinateur personnel et d'envoyer le jeton sous forme d'un message de texte à partir de l'unité mobile (310) au centre d'authentification (330), qui obtient également un numéro de téléphone mobile et une identification de cellule associés à l'unité mobile (310) ;
• à condition que le message de texte arrive au centre d'authentification (330) dans un certain temps avec un jeton acceptable à partir de l'une des positions géographiques valides comme défini par l'identification de cellule, un moyen pour permettre au centre d'authentification (330) d'envoyer une authentification au serveur d'application (340).

12. Arrangement selon la revendication 11, **caractérisé en ce que** le centre d'authentification (330) est pourvu d'une table ayant un enregistrement pour chaque utilisateur comprenant une identité, un numéro de téléphone mobile et une identification de cellule valide.

13. Arrangement selon la revendication 11, **caractérisé en ce qu'**un terminal combiné est utilisé à la place d'un téléphone mobile et d'un ordinateur personnel.

14. Arrangement selon la revendication 13, **caractérisé en ce que** le terminal combiné est un téléphone intelligent.

15. Arrangement selon la revendication 13, **caractérisé en ce que** le terminal combiné est un téléphone à protocole d'application sans fil (WAP).

16. Arrangement selon la revendication 11, **caractérisé en ce que** le jeton est envoyé dans un message de texte, à partir du centre d'authentification (330).

17. Arrangement selon la revendication 11, **caractérisé en ce que** le jeton est automatiquement retourné dans un message de texte.
